# EUROPÄISCHE PATENTANMELDUNG

(11) **EP 3 543 106 A1**
(43) Veröffentlichungstag der Anmeldung: **25.09.2019**
(21) Anmeldenummer: 19163787.5
(22) Anmeldetag: 19.03.2019
(51) Int. Cl.: B62M 9/00, B62M 9/10

(54) **ADAPTERSCHEIBE FÜR EIN FAHRRADKETTENRAD**

(30) Priorität: 20.03.2018 DE 102018106522
(71) Anmelder: Arntz Beteiligungs GmbH & Co. KG, 37671 Höxter (DE)
(72) Erfinder: Bernds, Thomas, 88662 Überlingen (DE)
(74) Vertreter: Gramm, Lins & Partner Patent- und Rechtsanwälte PartGmbB

(57) **Zusammenfassung**

Die Erfindung betrifft eine Adapterscheibe (24) für ein Fahrrad (10) mit (a) einer radial außen angeordneten Zahnung (44) zum Antreiben eines Zahnriemens (26) und (b) einer radial innen angeordneten Koppelstruktur (34) zum Koppeln mit einem Kettenrad (14) des Fahrrads (10).

## Beschreibung

Die Erfindung betrifft eine Adapterscheibe für ein Fahrrad. Gemäß einem zweiten Aspekt betrifft die Erfindung ein Fahrrad mit einer Tretkurbel, die ein Kettenrad besitzt, und einem Rad, insbesondere einem Hinterrad, das vorzugsweise ein Abtriebs-Kettenrad aufweist.

Fahrräder besitzen eine Tretkurbel und ein angetriebenes Rad, in der Regel das Hinterrad, sowie meistens eine Kette zum Übertragen des Drehmoments von dem Kettenrad, das mit der Tretkurbel verbunden ist, auf ein Abtriebs-Kettenrad, das in der Regel mit dem Hinterrad verbunden ist. Es ist zudem möglich, dass statt der Kette ein Zahnriemen verwendet wird. Trotz der Vorteile, die Zahnriemen gegenüber Ketten besitzen, werden diese in Fahrrädern bislang kaum eingesetzt.

Aus der DE 199 29 613 A1 ist bekannt, eine elektrische Antriebsvorrichtung für ein Fahrrad nachzurüsten. Dabei wird eine Scheibe verwendet, mittels der das Hinterrad des Fahrrads per Riementrieb von einem Motor angetrieben werden kann.

Aus der WO 2009/ 056 540 A1 ist eine Adapterscheibe für ein Getriebe von Fahrrädern bekannt, mittels der ein Hinterrad eines Fahr- oder Motorrads gegen das Hinterrad eines anderen Herstellers ausgetauscht werden kann, indem eine Adapterscheibe verwendet wird.

Der Erfindung liegt die Aufgabe zu Grunde, den Einsatz von Zahnriemen in Fahrrädern zu erleichtern.

Die Erfindung löst das Problem durch eine Adapterscheibe für ein Fahrrad mit (a) einer radial außen angeordneten Zahnung zum Antreiben eines Zahnriemens und (b) einer radial innen angeordneten Koppelstruktur zum Koppeln mit einem Kettenrad des Fahrrads.

Gemäß einem zweiten Aspekt löst die Erfindung das Problem durch ein gattungsgemäßes Fahrrad mit einer erfindungsgemäßen Adapterscheibe, die mit einem Abtriebs-Riemenrad und einem Zahnriemen, der mit der Adapterscheibe und dem Abtriebs-Riemenrad einen Riementrieb bildet.

Vorteilhaft an der Erfindung ist, dass Fahrräder mit Kettenantrieb leicht auf einen Antrieb mittels Zahnriemen umgestellt werden können. Das hat den Vorteil, dass Besitzer eines Fahrrads mit einem Kettenantrieb nur eine geringe Investition tätigen müssen, um die Vorteile eines Riementriebs zu erhalten. Stellt man umgekehrt fest, dass der Riementrieb seinen Bedürfnissen nicht entgegenkommt, kann man das umgerüstete Fahrrad mit einfachen Mitteln erneut mit einem Kettenantrieb versehen.

Vorteilhaft ist zudem, dass die Umrüstung besonders einfach ist.

Im Rahmen der vorliegenden Beschreibung wird unter einem Fahrrad insbesondere ein zweirädriges Fahrzeug, das per Muskelkraft bewegbar ist, verstanden. Ein Fahrrad hat zwei Räder, nämlich ein Vorderrad und ein Hinterrad. Unter einem Fahrrad werden insbesondere auch ein Pedelec und ein E-Bike verstanden. Ein Pedelec ist ein Fahrrad, das einen Elektromotor besitzt, der den Fahrer nur dann unterstützt, wenn er gleichzeitig selbst in die Pedale tritt. Unter einem E-Bike wird insbesondere ein Fahrrad verstanden, das einen Elektromotor aufweist, der auch dann ein Drehmoment liefert, wenn der Fahrer nicht in die Pedale tritt.

Unter dem Merkmal, dass es sich um eine Adapterscheibe handelt, wird insbesondere verstanden, dass die Adapterscheibe keine Scheibe im streng mathematischen Sinne ist, also keine Zylinderform hat. Die Dicke der Adapterscheibe ist jedoch deutlich kleiner als ein Durchmesser eines Hüllzylinders der Adapterscheibe. Die Dicke beträgt beispielsweise höchstens ein zwanzigstel des Durchmessers. Ein Hüllzylinder ist derjenige gedachte Zylinder minimalen Durchmessers, der die Adapterscheibe umgibt.

Unter der Koppelstruktur zum formflüssigen Koppeln mit dem Kettenrad wird insbesondere eine Struktur verstanden, die so ausgebildet ist, dass sie mit einer Außenzahnung des Kettenrads des Fahrrads ohne Spiel in Umfangrichtung zusammenwirkt. Dazu besitzt die Koppelstruktur zumindest einen Vorsprung, vorzugsweise zwei oder drei Vorsprünge, die in Ausnehmungen des Kettenrads des Fahrrads eingreifen.

Gemäß einer bevorzugten Ausführungsform besitzt die Adapterscheibe einen Sicherungsring zum Sichern der Adapterscheibe an dem Kettenrad. Insbesondere ist der Sicherungsring zum axialen Verspannen gegen das Kettenrad ausgebildet. Auf diese Weise wird eine einfache Befestigung der Adapterscheibe an dem Kettenrad ermöglicht. Es sei darauf hingewiesen, dass der Sicherungsring selbstverständlich nicht mit der Adapterscheibe identisch ist. Streng genommen kann davon gesprochen werden, dass die Adapterscheibe und der zugehörige Sicherungsring ein Adapterscheibensystem bilden.

Günstig ist es, wenn die Adapterscheibe eine Kettenrad-Anlage aufweist, an der das Kettenrad anliegt, sowie eine Sicherungsring-Anlage, an der der Sicherungsring anliegt. Der Sicherungsring übt eine Kraft aus, die zwischen der Sicherungsringanlage und dem Kettenrad wirkt und das Kettenrad gegen die Kettenradanlage drückt. Auf diese Weise wird die Adapterscheibe in axialer Richtung relativ zum Kettenrad fixiert.

Es ist möglich und bevorzugt, dass die Koppelstruktur einen sich in axialer Richtung ändernden Querschnitt hat, sodass durch axiales Aufschieben der Adapterscheibe auf die Koppelstruktur des Kettenrads ein spielfreier Formschluss möglich ist, wobei der Sicherungsring die Adapterscheibe in dieser Stellung fixiert.

In einem erfindungsgemäßen Fahrrad hat die Koppelstruktur vorzugsweise weniger Vorsprünge zum formflüssigen Eingreifen in Ausnehmungen im Kettenrad als das Kettenrad Ausnehmungen hat. Besonders günstig ist es, wenn die Koppelstruktur zwei, drei, vier oder fünf Vorsprünge aufweist. Zwar ist es möglich und erfindungsgemäß, dass die Koppelstruktur mehr Vorsprünge hat, diese können aber dazu führen, dass die Adapterscheibe aufwändiger zu montieren ist.

Gemäß einer bevorzugten Ausführungsform weist das Hinterrad ein Abtriebs-Zahnrad zum Zusammenwirken mit einer Kette auf und das Abtriebs-Riemenrad ist mit dem Abtriebs-Kettenrad formschlüssig verbunden. Durch Entfernen des Abtriebs-Riemenrads und der Adapterscheibe und Aufziehen einer Kette auf Kettenrad und Abtriebs-Kettenrad wird ein herkömmliches Fahrrad mit Kettenantrieb erhalten.

Im Folgenden wird die Erfindung anhand der beigefügten Zeichnungen näher erläutert. Dabei zeigt:
- Figur 1: in Teilfigur 1a ein erfindungsgemäßes Fahrrad in einer Übersicht,
in Teilfigur 1b eine Glaskörperansicht einer erfindungsgemäßen Adapterscheibe des erfindungsgemäßen Fahrrads gemäß Figur 1a,
in Teilfigur 1c eine Seitenansicht einer erfindungsgemäßen Adapterscheibe,
- Figur 2: in Teilfigur 2a eine dreidimensionale Ansicht der Adapterscheibe, in Teilfigur 2b eine alternative Ausführungsform einer erfindungsgemäßen Adapterscheibe in Montagestellung an einem Kettenrad und
in Teilfigur 2c eine Explosionsansicht der Adapterscheibe gemäß Figur 2b.

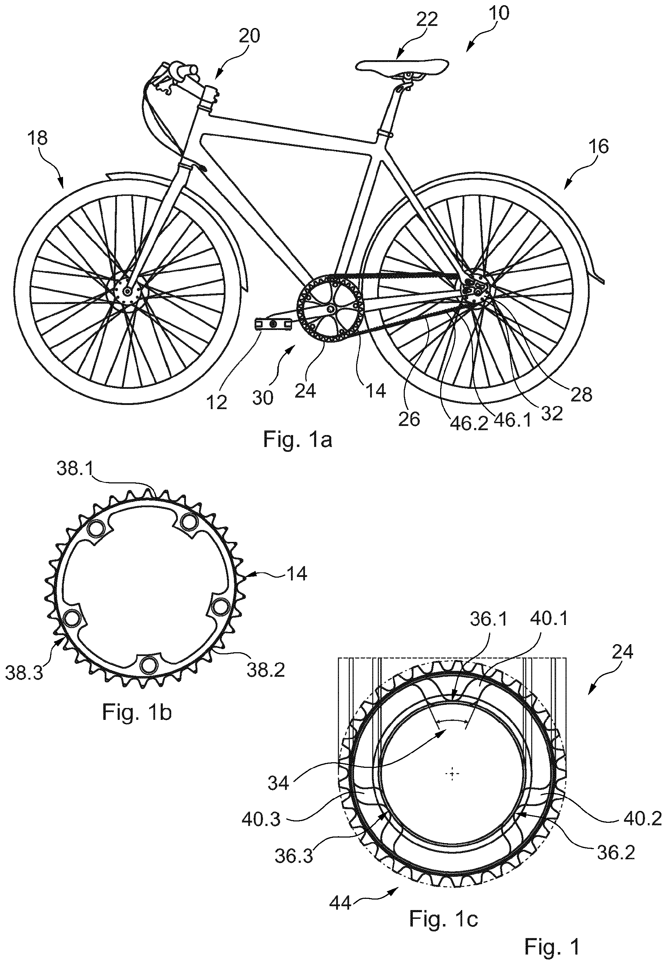

Figur 1 zeigt ein erfindungsgemäßes Fahrrad 10 mit einer Tretkurbel 12, die ein Kettenrad 14 besitzt. Das Fahrrad 10 besitzt zudem ein erstes Rad in Form eines Hinterrades 16 und ein zweites Rad in Form eines Vorderrads 18 sowie einen Lenker 20 und einen Sattel 22.

Das Kettenrad 14 des Fahrrads 10 ist mit einer erfindungsgemäßen Adapterscheibe 24 formschlüssig verbunden. Auf der Adapterscheibe 24 läuft ein Zahnriemen 26, der eine Drehbewegung der Drehkurbel 12 auf ein Abtriebs-Riemenrad 28 überträgt. Die Tretkurbel 12, das Kettenrad 14, die Adapterscheibe 24, der Zahnriemen 26 und das Abtriebs-Riemenrad 28 bilden einen Riementrieb 30.

Es ist nicht notwendig, aber günstig und stellt eine bevorzugte Ausführungsform dar, dass das Abtriebs-Riemenrad 28 mit einem Abtriebs-Kettenrad 32 formschlüssig verbunden ist. Alternativ ist auch ein Reibschluss oder Stoffschluss möglich. In diesem Fall ist das Abtriebs-Riemenrad 28 ebenfalls als Adapterscheibe ausgebildet. Es ist dann möglich, die beiden Adapterscheiben 24, 28 zu entfernen und den Zahnriemen 26 durch eine Kette zu ersetzen, sodass das Fahrrad 10 einfach auf einen Kettentrieb umgerüstet werden kann.

Figur 1b zeigt eine Detailansicht des Kettenrads 14 mit den Ausnehmungen 38.1 (i = 1, 2, ... N; N ist die Zahl der Ausnehmungen).

Figur 1c zeigt eine Glaskörperansicht der erfindungsgemäßen Adapterscheibe 24, die eine Koppelstruktur 34 aufweist. Die Koppelstruktur 34 umfasst im vorliegenden Fall drei Vorsprünge 36.1, 36.2, 36.3 zum Eingreifen in entsprechende Ausnehmungen 38.1, 38.2, 38.3 im Kettenrad 14.

Zu erkennen ist zudem, dass die Adapterscheibe 24 Kettenrad-Anlagen 40.1, 40.2, 40.3 aufweist, an denen in Montagestellung das Kettenrad 14 (vgl. Figur 1a) anliegt. Alternativ können nur eine oder zwei Kettenrad-Anlagen vorhanden sein. Zudem ist es möglich, dass vier, fünf oder mehr Kettenrad-Anlagen vorhanden sind.

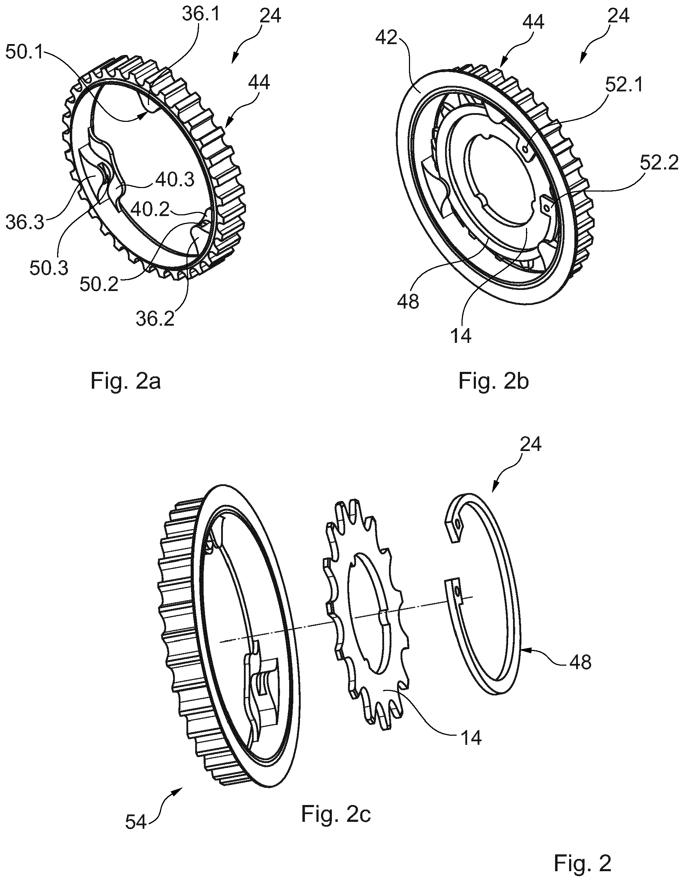

Figur 2a zeigt eine perspektivische Ansicht der Adapterscheibe 24.

Figur 2b zeigt eine alternative Ausführungsform einer erfindungsgemäßen Adapterscheibe 24, die zusätzlich eine Bordstruktur 42 aufweist, die scheibenförmig ist. Die Bordstruktur 42 ist ein integraler Bestandteil der Adapterscheibe 24. Gemäß einer nicht gezeigten Ausführungsform kann die Adapterscheibe 24 auch zwei Bordstrukturen 42 aufweisen, zwischen denen eine Zahnung 44 ausgebildet ist. Die Zahnung 44 ist zum formschlüssigen Zusammenwirken mit Zähnen 46.i (vgl. Figur 1a) des Zahnriemens 26 ausgebildet.

Figur 2b zeigt zudem einen Sicherungsring 48 der das Kettenrad 14 gegen die Adapterscheibe 24 drückt. Der Sicherungsring 48 kann beispielsweise in Lagerschlitze 50.1, 50.2, 50.3 (vgl. Figur 2a) in den jeweiligen Vorsprüngen 36.1, 36.2, 36.3 eingreifen. Freie Enden 52.1, 52.2 des Sicherungsrings 48 drücken gegen das Kettenrad 14.

Figur 2c zeigt eine Explosionsansicht der Adapterscheibe 24 gemäß Figur 2b. Der Sicherungsring 48 sowie die Adapterscheibe 24 bilden einen Adapterscheibensystem 54.

### Bezugszeichenliste:

- 10: Fahrrad
- 12: Tretkurbel
- 14: Kettenrad
- 16: Hinterrad
- 18: Vorderrad

- 20: Lenker
- 22: Sattel
- 24: Adapterscheibe
- 26: Zahnriemen
- 28: Abtriebs-Riemenrad

- 30: Riementrieb
- 32: Abtriebs-Kettenrad
- 34: Koppelstruktur
- 36: Vorsprung
- 38: Ausnehmung

- 40: Kettenrad-Anlage
- 42: Bordstruktur
- 44: Zahnung
- 46: Zahn
- 48: Sicherungsring

- 50: Lagerschlitz
- 52: freies Ende
- 54: Adapterscheibensystem

- i: Laufindex
- N: Zahl der Ausnehmungen

## Patentansprüche

1. Adapterscheibe (24) für ein Fahrrad (10) mit
(a) einer radial außen angeordneten Zahnung (44) zum Antreiben eines Zahnriemens (26) und
(b) einer radial innen angeordneten Koppelstruktur (34) zum Koppeln mit einem Kettenrad (14) des Fahrrads (10).

2. Adapterscheibe (24) nach Anspruch 1, **gekennzeichnet durch** einen Sicherungsring (48) zum Sichern der Adapterscheibe (24) an dem Kettenrad (14).

3. Fahrrad (10) mit
(a) einer Tretkurbel (12), die ein Kettenrad (14) besitzt, und
(b) einem Rad,
**gekennzeichnet durch**
(c) eine Adapterscheibe (24) nach Anspruch 1, die mit dem Kettenrad (14) verbunden ist,
(d) einem Abtriebs-Riemenrad (28) und
(e) einem Zahnriemen (26), der mit der Adapterscheibe (24) und dem Abtriebs-Riemenrad (28) einen Riementrieb (30) bildet.

4. Fahrrad (10) nach Anspruch 3, **dadurch gekennzeichnet, dass** die Koppelstruktur (34) weniger Vorsprünge (36) zum formschlüssigen Eingreifen in Zahn-Ausnehmungen (38) im Kettenrad (14) aufweist als das Kettenrad Ausnehmungen hat.

5. Fahrrad (10) nach Anspruch 3 oder 4, **dadurch gekennzeichnet, dass** die Koppelstruktur (34) zumindest drei Vorsprünge (36.1, 36.2, 36.3) hat.

6. Fahrrad (10) nach einem der Ansprüche 3 bis 5, **dadurch gekennzeichnet, dass** das Rad ein Hinterrad (16) ist, wobei
(a) ein Abtriebs-Kettenrad (32) zum Zusammenwirken mit einer Kette aufweist und
(b) das Abtriebs-Riemenrad (28) mit dem Abtriebs-Kettenrad (32) formschlüssig verbunden ist.
